# EUROPEAN PATENT SPECIFICATION

(11) **EP 0 526 928 B1**
(45) Date of publication and mention of the grant of the patent: **26.04.1995**
(21) Application number: 92202089.6
(22) Date of filing: 08.07.1992
(51) Int. Cl.: F25D 3/08

(54) **Device for cooling an object**
Vorrichtung zum Kühlen eines Objekts
Dispositif de refroidissement d'un objet

(30) Priority: 05.08.1991 US 740284
(43) Date of publication of application: 10.02.1993
(73) Proprietor: Vacu Products B.V., NL-2628 AS Delft (NL)
(72) Inventor: Schneider, Bernardus Johannes Josephus Augustinus, NL-2645 BH Delfgauw (NL)
(74) Representative: Voncken, Bartholomeus Maria Christiaan

(56) References cited:
- US-A- 4 344 303
- US-A- 4 831 842
- US-A- 4 989 418

## Description

The invention relates to a device for cooling an object, as defined in the preamble of claim 1. Such a device is known from US-A-4 399 668.

At the present several devices for cooling an object are known. One type of a known device for cooling an object comprises a rigid receptacle for receiving the object. The receptacle is double walled, wherein between the inner and outer wall a temperature conditionable fluid is trapped.

A second type of a known device for cooling an object comprises a bag containing a cooling liquid or alike. The bag may be applied on or around the object.

A device according to the first type referred to above has as major disadvantage, that it is rather clumsy and space consuming. Generally such a device is only well suited for cooling one type of objects having specific dimensions.

Although a device according to the second type mentioned above is more flexible in its use, a major disadvantage is its disability to direct the cold only to the object to be cooled and not to the surroundings.

It is an object of the invention to provide a device for cooling an object, in which the disadvantages of the known devices have been avoided, but which combines a great flexibility with an effective cooling operation.

The state of the art, as represented by US-A-4.399.668, shows a device for cooling an object comprising a deformable sleeve-like body, which firstly comprises an inner compartment intended to contact the object and housing a non-freezing cooling liquid and secondly an outer compartment surrounding the inner compartment and housing an insulator.

Prior to use, the known device is stored in a refrigerator. Because the inner compartment houses a non-freezing cooling liquid the sleeve-like body maintains its deformability, even at low temperatures. This means, that the sleeve-like body can be given any desired shape, depending on the space available in the refrigerator. While being stored in the refrigerator the cooling liquid is cooled down. When using the known device for cooling an object, such as a bottle, can or the like, the device is taken out of the refrigerator and with its deformable sleeve-like body positioned around the object to be cooled. Because the inner compartment now contacts the object there will occur an effective heat transfer from the object to the cooling liquid. Thus the object will be cooled in a very effective way.

The insulator housed in the outer compartment avoids, that a heat transfer from the surroundings to the cooling liquid occurs. This not only enhances the process of cooling down the object, but also improves the properties of the device for keeping cool the object after being cooled down.

As mentioned previously, the cooling liquid does not freeze at low temperatures. This means that the sleeve-like body remains deformable at the entire temperature range for which the device is intended. As a result the sleeve-like body can adapt its shape to the object to be cooled, for example a bottle having a circular cross-section or a can having a square cross-section.

Further, the sleeve-like body has a variable inner diameter which allows an adjustment thereof to objects having different outer dimensions.

Like this it is guaranteed that the inner wall of the inner compartment of the sleeve-like body maintains its positive engagement on the object to be cooled, irrespective of the outer dimensions of said object. Such a positive engagement improves the cooling properties of the device. The firmer the engagement the quicker cooling down of the object occurs. Moreover, the period of keeping the objects cool is extended. If a gap would occur between the inner wall of the inner compartment and the outside of the object to be cooled the properties of the device for cooling down an object would decrease dramatically.

Of course a given sleeve-like body having a variable inner diameter can only cope with objects having diameters within a certain range. With a sleeve-like body used for bottles it is possible to cover the range from a slim Elzas wine bottle up to a large Champagne bottle. When referring to bottles and cans, as much as two different sleeve-like bodies will be sufficient to cover all regular diameters.

For obtaining a variable inner diameter the insulator comprises a compressible resilient material, such as polyether foam, whereas according to the invention the outer compartment is connected with the surroundings via at least one opening. If the device is applied around an object having an outer diameter necessitating a larger inner diameter of the sleeve-like body the inner compartment contacting the object is pressed outwardly, such that the outer compartment is deformed while compressing the resilient material. The air in the outer compartment is vented through the opening. Thus, the compressible resilient material on the one hand enables a change of the inner diameter of the sleeve-like body and on the other hand ensures, through its resiliency, a positive engagement of the inner wall of the inner compartment on the object to be cooled. Deforming the outer compartment is made possible by the opening, allowing the air to escape. If the object is removed from the sleeve-like body the resilient material will resume its original shape and air is sucked in through the opening.

The opening further allows compressing the device manually for storing it in an constricted area, for example in a refrigerator.

For enabling a variation of the inner diameter of the sleeve-like body the dimensions of the inner wall of the inner compartment of course have to allow an outwardly directed displacement of the inner compartment. The maximum diameter which the sleeve-like body can cope with will be determined by the dimensions of the outer wall of the outer compartment of the sleeve-like body.

According to a special embodiment of the device the opening can be closed whereas the outer compartment is inflatable. Inflating the outer compartment presses the inner compartment against the object to be cooled. Thus the cooling properties are still improved. Further the air blown into the outer compartment enhances the insulating properties of the device. Finally inflating the outer compartment adds to the stiffness of the device when positioned around an object.

Preferably the compartments consist of separate circumferentially regularly spaced subcompartments. Most preferably each compartment comprises an even number, preferably six, subcompartments. Dividing the compartments in such separate subcompartments creates a device which can be folded to a nearly-flat shape. This folding is extremely simple, if an even number of compartments are provided.

For some applications it is possible, that the subcompartments are interconnected by elastic intermediary parts. These intermediary parts, such as stretch or elastic foils, elastic rubbers or alike, improve the diameter-variability of the sleeve-like body.

Further, according to a preferred embodiment, the sleeve-like body comprises an releasable axially extending division. At this division the sleeve-like body can be taken apart to obtain a flat shape. In such a flat shape the device can be used for locally cooling objects without completely surrounding these objects.

Still another possibility is offered by an embodiment, in which the parts of the sleeve-like body adjoining each other at the division are interconnectable by means of variable-length parts, such as strips of Velcro. When applying the device to an object to be cooled the variable length parts may be disconnected temporarily.

To avoid that drops of condensated water drip down from the object to be cooled or from the device it is possible, that at one end the sleeve-like body comprises an inwardly extending collar. This collar then will collect these drops of water.

Preferably the inner compartment is only partially filled with cooling liquid and elsewise evacuated. This means, that the inner compartment is overdimensioned in relation to the amount of cooling liquid. As a result this inner compartment can deform very easilly thus adapting extremely well to the shape of the object to be cooled.

For improving the cooling properties of the cooling device according to the invention preferably the inner wall of the inner compartment is manufactured of a thin material having excellent heat transfer properties, whereas the outer wall of the outer compartment is manufactured of a material having a low heat transferability. Further the material of the outer wall should be thick enough to offer enough strength.

The cooling liquid used in the cooling device according to the invention can be of a known composition. It is advantageous however, that the cooling liquid has an eye-catching colour and/or a bitter taste and is non-toxic. The eye-catching colour provides the device with an esthetical apearance. The bitter taste prevents children from drinking the cooling liquid. The use of a non-toxic, food-approved, cooling liquid may be imposed by governmental regulations. A gel may be added to the cooling liquid to offer it a viscous character.

For offering promotional characteristics to the cooling device according to the invention, in one embodiment the sleeve-like body bears a temperature sensitive print.

The cooling device according to the invention is very versatile in its use. Because of its variable inner diameter, it can be used on different objects. Positioning the cooling device around an object is quick, simple and requires but little strength, whereas after having positioned the cooling device a firm engagement between cooling device and object occurs. Thus during normal use the cooling device will not slide off from the object unintentionally.

Besides of cooling objects the device according to the invention is extremely well-equiped for keeping objects cool. Further the device according to the invention may be used for use in the medical field, for example in cold-therapy.

It is emphasized, that notwithstanding the above the device is also suitable for heating objects. In such case the device could be heatened up in a suitable apparatus, such as a microwave oven before being positioned around an object to be heated.

Hereinafter the invention will be elucidated further referring to the drawing, in which an embodiment of the device according to the invention is shown.
Fig. 1 shows in a perspective view an embodiment of the device according to the invention;
Fig. 2 shows, on a larger scale, the device of fig. 1 in an elevational view;
Fig. 3 shows a cross-section according to line III-III in fig. 2, and
Fig. 4 shows a cross-section corresponding to the cross-section of fig. 3, after the device has been positioned around an object.

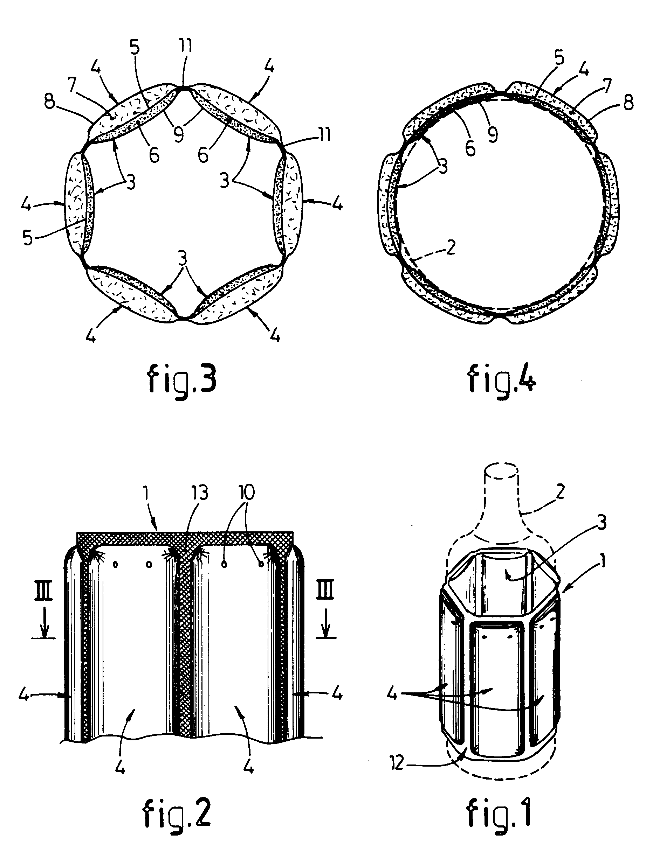

The device for cooling an object shown in fig. 1 mainly consists of a deformable sleeve-like body 1. In fig. 1 in dotted lines a bottle 2 has been indicated around which this sleeve-like body 1 may be positioned.

As clearly illustrated in fig. 3, the sleeve-like body comprises a number of inner compartments 3, in the shown embodiment six. Further the sleeve-like body comprises six outer compartments 4.

Although in the present embodiment an equal number of outer compartments 4 and inner compartments 3 are shown, it is possible that these numbers are not equal. Moreover, it is possible, that the sleeve-like body 1 only comprises one inner compartment 3 and only one outer compartment 4, each of which extends around the entire circumference of the sleeve-like body.

The inner compartments 3 and outer compartments 4 are separated by a partition wall 5. Each inner compartment 3 houses a non-freezing cooling liquid 6, whereas each outer compartment 4 houses an insulator 7 made of a compressible resilient material, such as polyether foam.

In the situation shown in fig. 3 the sleeve-like body 1 is in a relaxed position and not positioned around an object. In this position the compressible resilient material 7 is expanded, whereas the inner compartments 3 extend somewhat inwardly from the sleeve-like body.

If the cooling device according to the invention is positioned around a bottle 2 (as shown in fig. 4) this bottle 2 pushes the inner compartments 3 outwardly. Because of the fact, that the volume of the cooling liquid does not change the partition wall 5 is pushed outwardly too. The outer wall 8 of the sleeve-like body will resist an outwardly directed movement, such that the resilient material 7 housed in the outer compartments 4 will be compressed. This is clearly shown in fig. 4. The amount of outward movement of the inner compartments 3 and thus the amount of compression of the resilient material will depend on the diameter of the bottle.

Due to the resiliency of the resilient material 7 the inner wall 9 of the inner compartments 3 (illustrated in fig. 3) firmly engages the bottle 2. Thus an effective transfer of heat between bottle 2 and sleeve-like body 1 occurs.

When compressing material 7, air should escape from the outer compartments 4. For this reason openings 10 are provided in the outer wall 8 of the outer compartments 4, as illustrated in fig. 2. Through these openings 10 the air can be vented. Optionally these openings can be closed, for example after inflating the outer compartments 4. Like this, among others, the engagement between bottle 2 and inner compartments 3 can still be improved.

As mentioned before the cooling device illustrated may be used on objects having different diameters. Depending on the diameter of the object to be cooled the inner compartments 3 are in a more or less extent pushed outwardly. The maximum allowable diameter of the object to be cooled is determined by the dimensions of the outer wall 8 of the outer compartments 4. If objects having a larger diameter than allowable by the outer wall have to be cooled one can use a cooling device with a larger outer diameter. Alternatively it is possible that adjoining compartments are interconnected by elastic intermediary parts, in fig. 3 for example at one ore more of the locations 11. However, it is possible too that at one of the locations 11 a releasable axially extending division is provided (in fig. 2 extending from top to bottom between two adjoining compartments 4). In such a case the parts of the sleeve-like body adjoining each other at the division could be interconnectable by means of variable length-parts, such as strips of Velcro.

For collecting drops of condensating water the sleeve-like body 1 may near to its bottom end 12 (fig. 1) be provided with an inwardly extending collar (not shown).

Basically the illustrated cooling device is manufactured using plastic foils available on the market. For creating the compartments these plastic foils are welded together at welding seams 13. Directly adjacent to these welding seams 13 the inner compartments 3 may be partly evacuated, such that they are not completely filled with cooling liquid. This enhances the deformability of the sleeve-like body 1.

Preferably the inner wall 9 of the inner compartments 3 preferably is manufactured of a thin material having excellent heat transfer properties, whereas the outer wall 8 of the outer compartments 4 is manufactured of a material having a low heat transferability. Further it is possible, that the inner wall 9 of the inner compartments 3 is manufactured of an elastic material.

For promotional reasons it is possible, that the sleeve-like body 1 bears a temperature sensitive print.

The cooling device according to the invention may be used for quickly cooling a bottle, e.g. a bottle of wine. Tests have shown that within a few minutes the temperature of the contenance of the bottle can be lowered considerably. However, the device can also be used to keep objects, e.g. a bottle of wine, cool during an extended period, such as during a pick-nick.

The illustrated device not only can be used for cooling objects or keeping these cool, but can also be used for heating objects. In such a case the liquid contained in the inner compartments 3 is not a cooling liquid but a heating liquid that should be heated up prior to use of the device. Such a heating up could for example take place in a microwave oven.

## Claims

1. Device for cooling an object, comprising a deformable sleeve-like body (1), which firstly comprises an inner compartment (3) intended to contact the object and housing a non-freezing cooling liquid and secondly an outer compartment (4) surrounding the inner compartment and housing an insulator (7), wherein the sleeve-like body has a variable inner diameter, which allows an adjustment thereof to objects having different outer dimensions, and wherein the insulator comprises a compressible resilient material, such as polyether foam, **characterized** in that the outer compartment is connected with the surroundings via at least one opening (10).

2. Device according to claim 1, **characterized** in that the opening (10) can be closed and that the outer compartment (4) is inflatable.

3. Device according to claim 1 or 2, **characterized** in that the compartments (3, 4) consist of separate circumferentially regularly spaced subcompartments.

4. Device according to claim 3, **characterized** in that each compartment (3, 4) comprises an even number, preferably six, of subcompartments.

5. Device according to claim 3 or 4, **characterized** in that the subcompartments are interconnected by elastic intermediary parts (11).

6. Device according to one of the claims 1-5, **characterized** in that the sleeve-like body (1) comprises a releasable axially extending division.

7. Device according to claim 6, **characterized** in that the parts of the sleeve-like body (1) adjoining each other at the division are interconnectable by means of variable-length parts, such as strips of Velcro.

8. Device according to one of the claims 1-7**, characterized** in that, at one end (12), the sleeve-like body (1) comprises an inwardly extending collar.

9. Device according to one of the claims 1-8, **characterized** in that the inner compartment (3) is only partially filled with cooling liquid and otherwise evacuated.

10. Device according to one of the claims 1-9, **characterized** in that the inner wall (9) of the inner compartment (3) is manufactured of a thin material having excellent heat transfer properties, whereas the outer wall (8) of the outer compartment (4) is manufactured of a material having a low heat transferability.

11. Device according to one of the claims 1-10, **characterized** in that the cooling liquid has an eye-catching colour and/or a bitter taste and is non-toxic.

12. Device according to one of the claims 1-11**, characterized** in that the sleeve-like body (1) bears a temperature sensitive print.

13. Device according to one of the claims 1-12, **characterized** in that the inner wall (9) of the inner compartment (3) is manufactured of an elastic material.

## Patentansprüche

1. Vorrichtung zum Kühlen eines Gegenstandes, umfassend einen verformbaren hülsenartigen Körper (1), der erstens ein inneres Abteil (3) zur Kontaktierung des Gegenstandes und zur Aufnahme einer nicht frierenden Kühlflüssigkeit und zweitens ein äußeres Abteil (4) aufweist, welches das innere Abteil umgibt und eine Isolierung (7) enthält, wobei der hülsenartige Körper einen variablen Innendurchmesser aufweist, der die Anpassung desselben an Gegenstände mit unterschiedlichen Abmessungen gestattet, und wobei die Isolierung ein komprimierbares nachgiebiges Material, wie Polyether-Schaumstoff, umfaßt, dadurch gekennzeichnet daß das äußere Abteil über mindestens eine Öffnung (10) mit der Umgebung in Verbindung steht.

2. Vorrichtung nach Anspruch 1, dadurch gekennzeichnet daß die Öffnung (10) verschließbar ist und daß das äußere Abteil (4) aufblasbar ist.

3. Vorrichtung nach Anspruch 1 oder 2, dadurch gekennzeichnet, daß die Abteile (3, 4) aus getrennten, entlang dem Umfang in regelmäßigen Abständen angeordneten Unterabteilen bestehen.

4. Vorrichtung nach Anspruch 3, dadurch gekennzeichnet, daß jedes Abteil (3, 4) eine gerade Anzahl, vorzugsweise sechs, Unterabteile aufweist.

5. Vorrichtung nach Anspruch 3 oder 4, dadurch gekennzeichnet, daß die Unterabteile durch elastische Zwischenteile (11) miteinander verbunden sind.

6. Vorrichtung nach einem der Ansprüche 1 bis 5, dadurch gekennzeichnet, daß der hülsenartige Körper (1) eine lösbare axial verlaufende Trennung aufweist.

7. Vorrichtung nach Anspruch 6, dadurch gekennzeichnet, daß die an der Trennung aneinandergrenzenden Teile des hülsenartigen Körpers (1) durch Teile mit variabler Länge, wie Velcro-Streifen, miteinander verbindbar sind.

8. Vorrichtung nach einem der Ansprüche 1 bis 7, dadurch gekennzeichnet, daß der hülsenartige Körper (1) an einem Ende (12) einen nach innen ragenden Bund aufweist.

9. Vorrichtung nach einem der Ansprüche 1 bis 8, dadurch gekennzeichnet, daß das innere Abteil (3) nur zum Teil mit Kühlflüssigkeit gefüllt und sonst leer ist.

10. Vorrichtung nach einem der Ansprüche 1 bis 9, dadurch gekennzeichnet, daß die Innenwand (9) des inneren Abteils (3) aus einem dünnen Material mit hervorragenden Wärmeleiteigenschaften hergestellt ist, während die Außenwand (8) des äußeren Abteils (4) aus einem Material mit geringer Wärmeleitfähigkeit hergestellt ist.

11. Vorrichtung nach einem der Ansprüche 1 bis 10, dadurch gekennzeichnet, daß die Kühlflüssigkeit eine ins Auge stechende Farbe und/oder einen bitteren Geschmack hat und nicht toxisch ist.

12. Vorrichtung nach einem der Ansprüche 1 bis 11, dadurch gekennzeichnet, daß der hülsenartige Körper (1) einen temperaturempfindlichen Aufdruck trägt.

13. Vorrichtung nach einem der Ansprüche 1 bis 12, dadurch gekennzeichnet, daß die Innenwand (9) des inneren Abteils (3) aus elastischem Material hergestellt ist.

## Revendications

1. Dispositif de refroidissement d'un objet, comportant un corps en forme de manchon déformable (1), qui comporte premièrement un compartiment interne (3) prévu pour venir en contact avec l'objet et renfermant un liquide de refroidissement qui ne gèle pas et deuxièmement un compartiment externe (4) entourant le compartiment interne et renfermant un isolant (7), le corps en forme de manchon ayant un diamètre interne variable, ce qui permet un réglage de celui-ci sur des objets ayant des dimensions externes différentes, et l'isolant comportant une matière élastique compressible, telle qu'une mousse polyéther, caractérisé en ce que le compartiment externe est relié à l'environnement par au moins une ouverture (10).

2. Dispositif selon la revendication 1, caractérisé en ce que l'ouverture (10) peut être fermée et en ce que le compartiment externe (4) est gonflable.

3. Dispositif selon la revendication 1 ou 2, caractérisé en ce que les compartiments (3, 4) se composent de sous-compartiments séparés circonférentiellement espacés de manière régulière.

4. Dispositif selon la revendication 3, caractérisé en ce que chaque compartiment (3, 4) comporte un nombre pair de sous-compartiments, de préférence six.

5. Dispositif selon la revendication 3 ou 4, caractérisé en ce que les sous-compartiments sont reliés par des parties intermédiaires élastiques.

6. Dispositif selon l'une quelconque des revendications 1 à 5, caractérisé en ce que le corps en forme de manchon (1) comporte une séparation libérable s'étendant axialement.

7. Dispositif selon la revendication 6, caractérisé en ce que les parties du corps en forme de manchon (1) qui se rejoignent au niveau de la séparation peuvent être reliées au moyen de parties de longueur variable, telles que des bandes de Velcro.

8. Dispositif selon l'une quelconque des revendications 1 à 7, caractérisé en ce que, à une extrémité (12), le corps en forme de manchon (1) comporte un collier s'étendant vers l'intérieur.

9. Dispositif selon l'une quelconque des revendications 1 à 8, caractérisé en ce que le compartiment interne (3) est seulement partiellement rempli de liquide de refroidissement et par ailleurs sous vide.

10. Dispositif selon l'une quelconque des revendications 1 à 9, caractérisé en ce que la paroi interne (9) du compartiment interne (3) est fabriquée dans une matière mince ayant d'excellentes propriétés de transfert de chaleur, alors que la paroi externe (8) du compartiment externe (4) est fabriquée dans une matière ayant une faible capacité de transfert de chaleur.

11. Dispositif selon l'une quelconque des revendications 1 à 10, caractérisé en ce que le liquide de refroidissement a une couleur attractive et/ou un goût amer et n'est pas toxique.

12. Dispositif selon l'une quelconque des revendications 1 à 11, caractérisé en ce que le corps en forme de manchon (1) porte une impression sensible à la température.

13. Dispositif selon l'une quelconque des revendications 1 à 12, caractérisé en ce que la paroi interne (9) du compartiment interne (3) est fabriquée dans une matière élastique.
